# EUROPÄISCHE PATENTSCHRIFT

(11) **EP 1 657 464 B1**
(45) Veröffentlichungstag und Bekanntmachung des Hinweises auf die Patenterteilung: **23.01.2008**
(21) Anmeldenummer: 05023474.9
(22) Anmeldetag: 27.10.2005
(51) Int. Cl.: F16D 48/02

(54) **Hydraulische Strecke**
Hydraulic line
Ligne hydraulique

(30) Priorität: 13.11.2004 DE 102004054995
(43) Veröffentlichungstag der Anmeldung: 17.05.2006
(73) Patentinhaber: LuK Lamellen und Kupplungsbau Beteiligungs KG, 77815 Bühl (DE)
(72) Erfinder: Grabenstätter, Jan, 76593 Gernsbach (DE)

(56) Entgegenhaltungen:
- DE-A1- 3 736 584
- DE-A1- 4 334 551
- DE-A1- 10 311 482
- US-A- 5 301 781

## Beschreibung

Die vorliegende Erfindung betrifft eine Vorrichtung zur Beeinflussung des Drucks beim Einkuppeln einer durch Druckmittel betätigten Fahrzeugkupplung nach den Merkmalen des Oberbegriffs des Anspruchs 1.

Bei einer selbstnachstellenden Kupplung (SAC) wird der Druckanstieg, den der Abfall in der Betätigungskraftlinie (Drop-off) der Kupplung verursacht, besonders beim Einkuppeln, d. h. beim Lösen der Fahrzeugkupplung, einerseits vom Fahrer als störend empfunden und außerdem werden das Schaltgetriebe, die Antriebswellen und die Antriebsgelenke mit einem erhöhten Drehmoment beaufschlagt, das größer ist als das im normalen Fahrbetrieb auftretende Drehmoment. Dies wiederum führt zu einem erhöhten Verschleiß an den entsprechenden im Eingriff stehenden Bauelementen.

Um diesen Abfall in der Betätigungskraftkennlinie der Kupplung zu verringern, werden beispielsweise direkt Veränderungen an der Kupplung vorgenommen, derart, dass Blattfedern mit degressiver Kennlinie in Kupplungen eingesetzt werden. Weitere Möglichkeiten bieten der Einsatz von in die hydraulische Strecke integrierter Drosseleinrichtung oder einem Rückschlagventil. So ist aus der DE-PS 695 921 ein Rückschlagventil bekannt, das zwischen Geber- und Nehmerzylinder eingebaut ist. Dadurch wird eine von der Strömungsrichtung abhängige, unterschiedliche Durchflusscharakteristik erzeugt. Bei Druckbeaufschlagung der hydraulischen Strecke, hier durch Niedertreten eines Kupplungspedals (Auskuppeln), wird dieses bei schneller Betätigung geöffnet und somit das Hydraulikmedium auf den Nehmerzylinder übertragen. Bei Freigabe des Pedals (Einkuppeln) erfolgt die Verschiebung des Hydraulikmediums nach der Pedalseite bei geschlossenem Rückschlagventil über eine kleinere Bohrung in der Rückschlagventilspindel (dadurch langsames Einkuppeln). Bei dieser Lösung wird abhängig von der Bewegungsrichtung des Druckmittels entweder das Rückschlagventil in einer Richtung geöffnet oder in entgegengesetzter Richtung geschlossen und dabei gedrosselt weitergeleitet. Eine weitere Lösung, eine von der Strömungsrichtung abhängige, unterschiedliche Durchflusscharakteristik zu erzeugen, wird in der DE 198 11 337 A1 offenbart. Diese Lösung beschreibt ein in die hydraulische Strecke zwischen Geber- und Nehmerzylinder angeordnetes Rückschlagventil mit zusätzlicher Drosselfunktion. Die Anordnung eines Ventilkörpers in der Hülse, in der funktionsmäßig beide Ventilarten integriert sind, sieht vor, dass bei einer Druckbeaufschlagung des Drosselventils entgegen der Drosselrichtung (Auskuppeln), das heißt bei einer Strömungsrichtung des Druckmittels vom Geberzylinder zum Nehmerzylinder, sich der Ventilkörper vom Dichtsitz verlagert und damit ein vergrößerter Durchströmquerschnitt einstellt. Beim Einkuppeln wird das Druckmittel zurück zur Pedalseite verschoben, wobei das Rückschlagventil geschlossen ist und der Durchfluss des Druckmittels über die kleinere Bohrung in der Rückschlagventilspindel erfolgt. In der DE 103 11 482 A1 wird ebenfalls eine Lösung zu dieser Problematik beschrieben. Im Unterschied zu der zuvor beschriebenen Lösung rückt jedoch hier der Zeitfaktor für den Ein- bzw. Auskuppelvorgang in den Vordergrund. Entsprechend zeichnet sich diese Lösung dadurch aus, dass zum Einrückzeitpunkt der Kupplung der Volumenstrom zwischen Nehmer- und Geberzylinder verringert ist, wodurch der Druck auf der Seite des Nehmerzylinders ansteigt und damit die Pedalgeschwindigkeit bzw. Einrückgeschwindigkeit der Kupplung reduziert wird. Durch eine zweite im Kolben vorhandene Öffnung, die durch ein Rückschlagventil überwacht wird, wird sichergestellt, dass der Ausrückvorgang bzw. das Auskuppeln nahezu ohne Zeitverlust erfolgen kann, da der Volumenstrom mit nur geringem Druckverlust vom Geberzylinder über das geöffnete Rückschlagventil zum Nehmerzylinder geleitet wird.

Aufgabe der Erfindung ist es, eine Ventilanordnung vorzuschlagen, die den Druckabfall beim Einkuppeln in der hydraulischen Strecke zwischen Nehmerzylinder und Geberzylinder verringert und gleichzeitig in den vorhandenen Bauraum integrierbar ist.

Diese Aufgabe wird dadurch gelöst, dass eine in der hydraulischen Strecke angeordnete Ventilanordnung, bestehend aus Drossel mit integriertem Rückschlagventil, die das Druckmittel mindestens beim Einkuppeln drosselt und das Rückschlagventil das Druckmittel bei Betätigung des Kupplungs- oder Bremspedals ungehindert durchlässt, in der Ventilanordnung ein axial verschiebbarer Kolben geführt ist, der endseitig einen Stößel aufweist und in einer Drosselbohrung bis zu einer als Drossel wirkenden Kappe axial bewegbar ist, wobei die Drosselbohrung mindestens an einer Stelle ihres Umfangs eine Erweiterung in Form einer Ausnehmung mit einer axialen Ausdehnung x aufweist, über deren Öffnungsgröße die Durchflussmenge an Druckmittel während der axialen Bewegung des Kolbens veränderbar bzw. steuerbar ist. Auf Grund der besonderen Ausgestaltung des Gehäuses der Ventilanordnung, insbesondere der zum Druckanschluss des Nehmerzylinders führende Teil so ausgebildet ist, dass in die Öffnung des Gehäuses eine Hülse einsetzbar ist, die mit zwei Bohrungen mit unterschiedlichen Durchmessern versehen ist, wobei die größere Bohrung als Drosselstelle fungiert und die kleinere Bohrung die Funktion hat, ein Rückschlagventil aufzunehmen. Auf diese Weise wurde eine Ventilanordnung geschaffen, die in kompakter Bauweise zwei Ventile miteinander vereinigt. Die besondere Gestaltung des Gehäuses der Ventilanordnung gestattet es, ohne besondere zusätzliche Hilfsmittel oder Bauteile diese direkt auch in eine bereits vorhandene hydraulische Strecke einzufügen.

Zur Steuerung des Druckabfalls am Geberzylinder beim Einkuppeln der Kupplung so, dass dadurch weder die Lebensdauer der zu diesem Zeitpunkt miteinander im Eingriff stehenden Bauteile verkürzt wird bzw. dass der Fahrer ein angenehmes Fahrgefühl erhält, wird die Drosselbohrung mit mehreren an ihrem Umfang angeordneten Ausnehmungen mit einer axialen Ausdehnung am Umfang der Drosselbohrung versehen, die einen beliebig geformtem Querschnitt haben können. Die Anzahl bzw. Ausgestaltung dieser Ausnehmungen ist vom Fahrzeugtyp bzw. der in diesen eingesetzten Kupplung abhängig. So kann die Ausnehmung ebenso gut als Hinterschneidung um die Bohrung ausgebildet sein, was fertigungstechnisch gegenüber mehreren am Umfang angeordneten Ausnehmungen sicherlich vorteilhafter ist.

Die bereits erwähnte, als weitere Drossel wirkende Kappe ist mit einer in ihrem Zentrum angeordneten Durchgangsbohrung versehen und weist an ihrem Außenumfang mehrere am Umfang verteilte Ausnehmungen auf, die ebenfalls dazu dienen, das Druckmittel in Richtung Nehmerzylinder zu drosseln. Über die über den Umfang verteilten, durch die Ausnehmungen verbliebenen Stege kann die Kappe im Druckanschluss des Nehmerzylinders radial und axial fixiert werden. Diese Fixierung kann beispielsweise durch eine im Innern des Gehäuses ausgeführte Verstemmung erfolgen oder indem im Gehäuse an der betreffenden Stelle eine Nut eingearbeitet ist, in die ein Sprengring eingesetzt wird. Wichtig ist allerdings die Lage der Bohrung der Kappe zur Drosselbohrung, in der der Stößel des Kolbens geführt wird, damit die Ausnehmung der Drosselbohrung mit einem Teil des Durchmessers der Innenbohrung der Kappe korrespondieren kann, so dass nicht nur die Drosselbohrung mit der Bohrung in der Kappe korrespondiert. Durch die Zuschaltung dieser weiteren Ausnehmung im Zeitpunkt des Einkuppelns der Kupplung wird, da sich diese nur über den Bereich der Drosselbohrung ausdehnt und somit wirksam ist, eine Überlagerung von mehreren Drosselstellen mit zeitlichem Versatz realisiert, wodurch letztendlich eine Abschwächung des Drop off erfolgt.

Um diesen zu optimieren, ist die Länge des Stößels des Kolbens mindestens der Länge der Drosselbohrung anzupassen. Wird die Länge des Stößels zu kurz gewählt, verfehlt die Ausnehmung ihre Wirkung, da das Druckmittel weder in der Richtung zum Nehmerzylinder noch in Richtung zum Geberzylinder die gewünschte Strömungsrichtung einhält. Ist der Stößel zu lang, erfolgt keine Anlage bzw. Abstützung der Stirnfläche des Kolbens an der gestuften Mantelfläche des Gehäuses, wodurch dieser keine Biegeentlastung erfährt und somit dessen Lebensdauer herabgesetzt wird.

Die wulstartige Gestaltung des Stößels in seinem Endbereich hat den Vorteil, dass sich über die sich ergebenden Differenzen der Durchmesser zwischen Drosselbohrung und Durchmesser des Stößels der Druckraum weiter in den Bereich des Anschlusses für den Nehmerzylinder fortsetzen kann und durch die axiale Verschiebung des Stößels eine Steuerung der Größe des Druckraums und damit des Durchflusses von Druckmittel möglich ist. Dadurch, dass der Außendurchmesser dieses Endbereichs dem Durchmesser der Drosselbohrung entspricht, wird über diesen Kontakt gleichzeitig eine Führung des Stößels in der Drosselbohrung und damit des Kolbens erzielt. Mit Hilfe einer in die gestufte Mantelfläche des Gehäuses vorgesehenen Bohrung kann das Druckmittel beim Einkuppeln den Ventilkörper des Rückschlagventils beaufschlagen, wodurch sich der Druckraum in dieser Richtung vergrößert. In umgekehrter Strömungsrichtung wird allerdings diese Bohrung vom Ventilkörper verschlossen, so dass damit die gewünschte Zwangsführung des Druckmittels über die in dieser Richtung offenen Bohrungen erreicht wird.

Die Erfindung soll nachfolgend am Beispiel einer Betätigung für eine Kupplung näher erläutert werden.

Es zeigen:
- Figur 1: eine hydraulische Strecke mit in diese integrierter erfinderischer Lösung,
- Figur 2: eine schematische Darstellung der erfinderischen Lösung,
- Figur 3: die erfindungsgemäße Lösung in Form eines Druckminderventils mit integriertem Rückschlagventil.
- Figur 3a: einen Ausschnitt der erfindungsgemäßen Lösung nach Figur 3 in Vergrößerung
- Figur 4: einen Druckverlauf am Geberzylinder über den Ausrückweg mit und ohne erfindungsgemäßer Ventilanordnung.

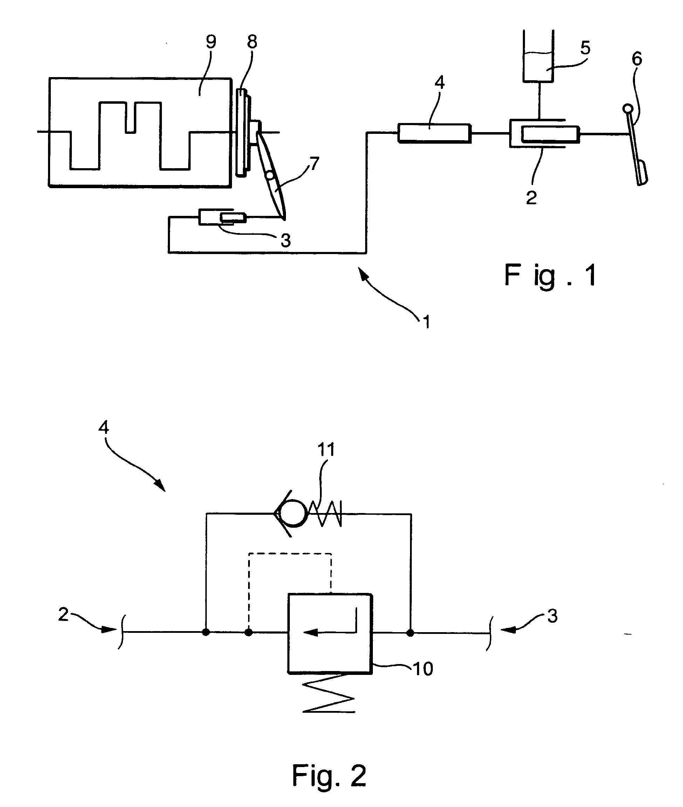

Mit der in Figur 1 dargestellten hydraulischen Strecke 1 wird die Betätigung einer Kupplung realisiert. Im Wesentlichen dient diese hydraulische Strecke 1 zur Übertragung einer auf das Kupplungspedal 6 eingeleiteten Kraftübertragung über einen Geberzylinder 2 zu einem Nehmerzylinder 3 bis letztendlich zu einem Ausrückmechanismus 7, der die Kupplung 8 betätigt. Dieses Pedal 6 könnte allerdings ebenso gut durch einen elektrischen Aktor ersetzt werden. Beim Niederdrücken des Kupplungspedals 6 wird der Kolben 10b des Geberzylinders 2 bewegt, der über eine Hydraulikleitung mit dem Nehmerzylinder 3 verbunden ist, wobei zwischengeschaltet eine Ventilanordnung 4 vorgesehen ist.

In Figur 2 ist der schematische Aufbau der Ventilanordnung 4 dargestellt, die im Wesentlichen aus einem Druckminderventil 10 mit integriertem Rückschlagventil 11 besteht und zur Darstellung der Wirkungsweise dient. So strömt das Druckmittel beim Auskuppeln nahezu ungehindert über das Rückschlagventil 11 vom Geberzylinder 2 zum Nehmerzylinder 3, wobei dabei das Rückschlagventil 11 geöffnet wird. Beim Einkuppeln kann das Druckmittel jedoch nur über das Druckminderventil 10 fließen und das Rückschlagventil 11 wird durch Druckbeaufschlagung geschlossen.

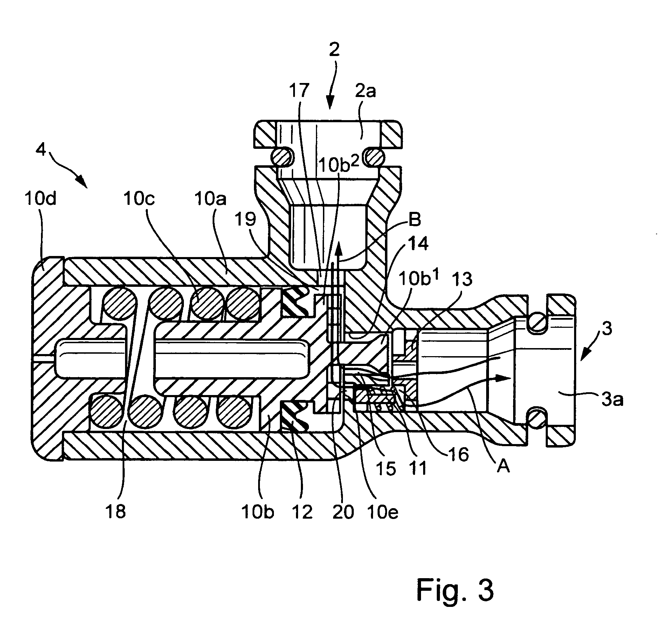

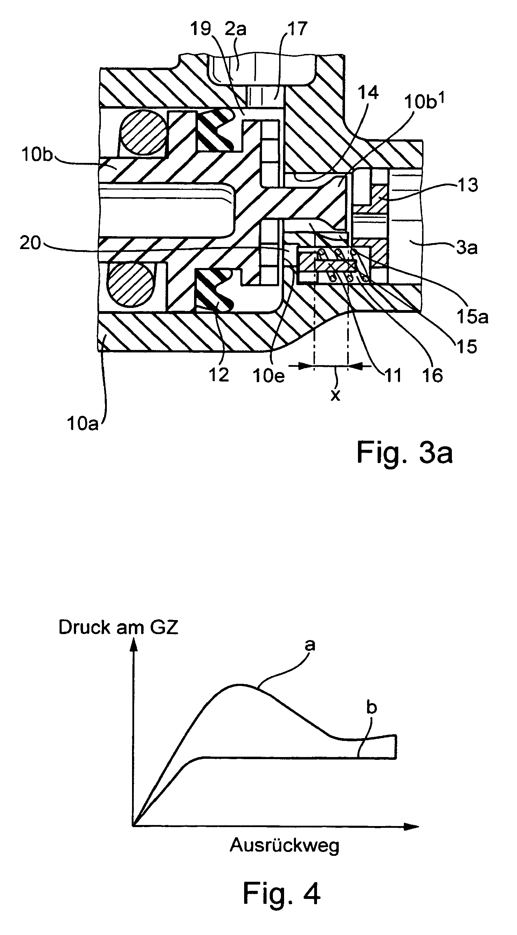

Figur 3 zeigt die Ventilanordnung 4 in einem Längsschnitt in der Stellung nach dem Einkuppeln. Diese zylinderförmige Ventilanordnung 4 besteht aus einem Druckminderventil 10, in das ein Rückschlagventil 11 integriert ist. Das Gehäuse 10a dieser Ventilanordnung 4 bzw. des Druckminderventils 10 ist spanlos oder spanabhebend hergestellt und weist zwei Anschlüsse für die Integration in die hydraulische Strecke 1 auf, wobei ein Anschluss für einen Geberzylinder 2 und der andere für einen Nehmerzylinder 3 vorgesehen ist. Die vom Innenraum der Ventilanordnung 4 abgehenden Bohrungen 14 und 17 weisen unterschiedlich große Durchmesser auf, wobei der zum Anschluss des Geberzylinders 2 führende Durchmesser 17 wesentlich kleiner als der zum Anschluss des Nehmerzylinders 3 führende Durchmesser 14 ist. Der Durchmesser 14 bildet eine Öffnung, in die eine Hülse eingesetzt ist mit zwei weiteren unterschiedlichen Bohrungen 15 und 16. Das Gehäuse 10a dient weiterhin zur Aufnahme eines Ventilkörpers in Gestalt eines Kolbens 10b, der längsverschieblich angeordnet ist und den Zylinderraum mit Hilfe einer Dichtung 12 in die Druckräume 18 und 19 unterteilt. Dieser Kolben 10b stützt sich bei seiner Bewegung in Richtung Gehäuseverschluss 10d an einer Feder 10c an diesem ab. Der Gehäuseverschluss 10d dient somit gleichzeitig als Anschlag für die Feder 10c und somit auch für den Kolben 10b. Der Druckraum 19 wird von einer radial gestuften Mantelfläche 10e, die in den Innenraum des Gehäuses 10a hineinreicht, in seiner radialen Ausdehnung beschränkt, setzt sich jedoch über die Bohrung 14 fort. Die in den Zylinderinnenraum ragende gestufte Mantelfläche dient weiterhin als dem Gehäuseverschluss 10d entgegengesetzte axiale Begrenzung des Kolbens 10b, dessen Anlagefläche bzw. Stirnseite 10b² mit am Umfang verteilt angeordneten Aussparungen versehen ist. Der zylinderförmige Körper des Kolbens 10b setzt sich anschließend an dessen Stirnseite 10b² in einem Stößel 10b¹ fort. Der Durchmesser des Stößels 10b¹ verjüngt sich ausgehend vom Durchmesser der Stirnseite 10b² stufenartig. Dieser Stößel 10b¹ weist ein wulstartiges Ende auf, das in der Drosselbohrung 15 und somit auch im Gehäuse des Druckminderventils 10 geführt ist. Diese Drosselbohrung 15 ist an mindestens einer Stelle ihres Umfangs in Richtung Nehmerzylinder 3 mit einer Ausnehmung 15a versehen. In der Hülse der Öffnung 14 dient die Bohrung 16 zur Aufnahme eines Rückschlagventils 11. Dieses Rückschlagventil 11 deckt im geschlossenen Zustand mit seinem axial verschiebbaren Ventilkörper eine in die radial gestufte Mantelfläche 10e eingebrachte Bohrung 20 ab. Eine im Druckanschluss 3a für den Nehmerzylinder 3 axial und radial fixierter Kappe 13 begrenzt das Rückschlagventil 11. Die Kappe 13, die mit einer zentrisch angeordneten Durchgangsbohrung als Drossel ausgebildet ist, weist auf ihrem Umfang verteilt angeordnete Ausnehmungen auf, die sich über deren gesamte Breite erstrecken. Die Öffnung 14 ist im Gehäuse 10a so gewählt, dass auf Grund ihrer Lage zur Achse des Kolbens 10b die Durchgangsbohrung der Kappe 13 mit der Drosselbohrung 15 bzw. mit der Ausnehmung 15a des inneren hülsenförmigen Abschnitts des Gehäuses 10a korrespondiert.

Obwohl die Figur 3 die Ventilanordnung 4 in eingekuppeltem Zustand darstellt, soll die Funktion ausgehend vom Ausrücken der Kupplung beschrieben werden. Beim Niederdrücken des Kupplungspedals 6 strömt Druckmittel vom Geberzylinder 2 in den Anschluss 2a über die Bohrung 17 in den Druckraum 19 der Ventilanordnung 4. Der Kolben 10b lag bis zu diesem Zeitpunkt mit seiner Stirnfläche 10b² an der gestuften Mantelfläche 10e an. Infolge des Druckanstiegs, der durch die Verringerung des Durchmessers vom Druckanschluss des Geberzylinders 2a zum Druckraum 19 mit Hilfe der Bohrung 19 noch verstärkt wird, wird die auf den Kolben 10b wirkende Vorspannkraft der Feder 10c überwunden und dieser axial in Richtung Gehäuseverschluss 10d bewegt, bis der Anschlag erreicht ist. Das Druckmittel strömt dabei im Druckraum 19 über die in der Stirnfläche 10b² des Kolbens 10b eingebrachten Ausnehmungen, weiter durch die vom Ventilkörper des Rückschlagventils 11 freigegebene Bohrung 20 in der gestuften Mantelfläche 10e, über die am Umfang der Kappe 13 angeordneten Ausnehmungen und letztendlich über den Druckanschluss 3a zum Nehmerzylinder 3 (Pfeil A zeigt die Strömungsrichtung des Druckmittels vom Geberzylinder 2 zum Nehmerzylinder 3 an). Da der Stößel 10b¹ bei der axialen Bewegung in diese Richtung die Drosselbohrung 15 sowie die Ausnehmung 15a mit seinem wulstartigen Ende verschließt, wird der Volumenstrom des Druckmittels zwischen dem Nehmerzylinder 3 und dem Geberzylinder 2 gedrosselt. Hierdurch stellt sich am Geberzylinder 2 ein konstanter Druck ein, der der Rückstellkraft der Feder 10c entspricht. Sinkt der Druck am Geberzylinder 2 unter die Rückstellkraft der Feder 10c, findet ein Wechsel der Strömungsrichtung des Druckmittels statt (diese Strömungsrichtung des Druckmittels vom Nehmerzylinder 3 zum Geberzylinder 2 wird von Pfeil B angezeigt). Das Druckmittel strömt vom Nehmerzylinder 3 über den Anschluss 3a des Druckminderventils 10 durch die zentrisch angeordnete Bohrung der Kappe 13 in die Drosselbohrung 15, wobei gleichzeitig zusätzlich Druckmittel auf die Stirnfläche der Ausnehmung 15a strömt, wodurch der Stößel 10b¹ und damit der Kolben 10b axial bewegt wird und dabei die Ausnehmung 15a freigibt. Aufgrund dieser zusätzlichen Öffnung 15a erfährt der Kolben 10b mit seinem Stößel 10b¹ eine dosierte Bewegung in axialer Richtung, die der durch die Strömung durch die Öffnung 15 möglichen Bewegung so lange überlagert wird, bis die axiale Ausdehnung der Ausnehmung 15a endet. Die Größe und Ausdehnung x der Ausnehmung 15a ist dabei abhängig von der jeweils eingesetzten Kupplung und ist aus Versuchen zu ermitteln. Das Druckmittel strömt weiter über die Drosselbohrung 15 und füllt den Druckraum 19 aus. Schließlich wird es über den Druckanschluss 2a in den Geberzylinder 2 weitergeleitet. Der Kolben 10b hat dabei seine geöffnete Stellung eingenommen, wodurch sich der Druckabfall zwischen Nehmerzylinder 3 und Geberzylinder 2 verringert hat. Der Druck am Geberzylinder 2 gleicht sich auf diese Weise wieder dem Druck am Nehmerzylinder 3 an.

Die Figur 3a zeigt in vergrößerter Darstellung einen Ausschnitt der zum Zeitpunkt des Einkuppelns miteinander in Wirkverbindung stehenden Bauteile zur besseren Darstellung.

In Figur 4 wird der Unterschied zwischen dem Druckabfall beim Einkuppeln am Geberzylinder 2 ohne und mit in die hydraulische Strecke eingesetzter Ventilanordnung 4 verdeutlicht. Die Kurve a zeigt den Drop off somit ohne und die Kurve b den Drop off mit Ventilanordnung 4, die sowohl als separates Bauteil in die hydraulische Strecke 1 zwischen Nehmerzylinder 3 und Geberzylinder 2 angeordnet als auch direkt in mindestens einem der Zylinder integriert sein kann.

### Bezugszeichenliste

- 1: Hydraulische Strecke
- 2: Geberzylinder
- 2a: Druckanschluss für Geberzylinder
- 3: Nehmerzylinder
- 3a: Druckanschluss für Nehmerzylinder
- 4: Ventilanordnung
- 5: Vorratsbehälter
- 6: Pedal
- 7: Kupplungsbetätigungseinrichtung
- 8: Kupplung
- 9: Motor
- 10: Druckminderventil
- 10a: Gehäuse Druckminderventil
- 10b: Kolben
- 10b¹: Stößel
- 10b²: Anlagefläche/ Stirnseite des Kolbens
- 10c: Feder
- 10d: Gehäuseverschluss
- 10e: Wand/ gestufte Mantelfläche
- 11: Rückschlagventil
- 12: Dichtung
- 13: Kappe
- 14: Bohrung/ Öffnung
- 15: Drosselbohrung
- 15a: Ausnehmung der Bohrung/ Öffnung 15
- 16: Bohrung
- 17: Bohrung
- 18,19: Druckraum
- 20: Bohrung
- A: Strömungsrichtung des Druckmittels beim Auskuppelvorgang
- B: Strömungsrichtung des Druckmittels beim Einkuppelvorgang
- x: axiale Ausdehnung der Ausnehmung 15a
- a, b: Kurve

## Patentansprüche

1. Hydraulische Strecke (1) zur Beaufschlagung einer Kupplung oder Bremse mit einem Druckmittel, mit einem dem Kupplungs- oder Bremspedal zugeordneten Geberzylinder (2) und einem die Kupplung oder Bremse beaufschlagenden Nehmerzylinder (3), die über eine Druckleitung miteinander verbunden sind, einer in der hydraulischen Strecke (1) angeordneten Ventilanordnung (4), bestehend aus Drossel mit integriertem Rückschlagventil (11), die das Druckmittel mindestens beim Einkuppeln drosselt und das Rückschlagventil (11) das Druckmittel bei Betätigung des Kupplungs- oder Bremspedals ungehindert durchlässt, in der Ventilanordnung (4) ein axial verschiebbarer Kolben (10b) geführt ist, eine Öffnung (20) dieser Ventilanordnung (4) von einem Rückschlagventil (11) überwacht wird und eine Bohrung (15) als Drosselstelle für den Einrückvorgang der Kupplung ausgeführt ist, **dadurch gekennzeichnet, dass** der Kolben (10b) endseitig einen Stößel (10b¹) aufweist, der in der Drosselbohrung (15) bis zu einer als Drossel wirkenden Kappe (13) axial bewegbar ist und die Drosselbohrung (15) mindestens an einer Stelle ihres Umfangs eine Erweiterung in Form einer Ausnehmung (15a) mit einer axialen Ausdehnung (x) aufweist.

2. Hydraulische Strecke nach Anspruch 1, **dadurch gekennzeichnet, dass** in eine Öffnung (14) des Gehäuses (10a) eine Hülse zur Aufnahme der Drosselbohrung (15) und einer Bohrung (16) zur Aufnahme eines Rückschlagventils (11) ausgebildet ist.

3. Hydraulische Strecke nach Anspruch 1, **dadurch gekennzeichnet, dass** die Bohrung (15) mit mehreren an ihrem Umfang angeordneten Ausnehmungen (15a) mit beliebig geformtem Querschnitt versehen ist.

4. Hydraulische Strecke nach Anspruch 1, **dadurch gekennzeichnet, dass** die Ausnehmung (15a) als Hinterschneidung um die Bohrung (15) ausgebildet ist.

5. Hydraulische Strecke nach Anspruch 1, **dadurch gekennzeichnet, dass** die Kappe (13) eine zentrische Durchgangsbohrung und an ihrem Außenumfang mehrere am Umfang verteilte Ausnehmungen aufweist.

6. Hydraulische Strecke nach den Ansprüchen 1 und 5, **dadurch gekennzeichnet, dass** die Ausnehmung (15a) mit einem Teil des Durchmessers der Innenbohrung der Kappe (13) korrespondiert.

7. Hydraulische Strecke nach den Ansprüchen 1, 5 und 6, **dadurch gekennzeichnet, dass** die Kappe (13) über ihren Außenumfang in einem Druckanschluss (3a) radial und axial fixiert ist.

8. Hydraulische Strecke nach Anspruch 1, **dadurch gekennzeichnet, dass** die Länge des Stößels (10b¹) der Länge der Drosselbohrung (15) angepasst ist.

9. Hydraulische Strecke nach Anspruch 1, **dadurch gekennzeichnet, dass** der Stößel (10b¹) in seinem Endbereich wulstartig gestaltet ist und der Außendurchmesser dieses Endbereichs dem Durchmesser der Drosselbohrung (15) entspricht.

10. Hydraulische Strecke nach Anspruch 1, **dadurch gekennzeichnet, dass** die gestufte Mantelfläche des Gehäuses (10a) im Bereich des Rückschlagventils (11) eine Bohrung (20) aufweist, die vom Ventilkörper des Rückschlagventils (11) richtungsabhängig verschließbar ist.

## Claims

1. Hydraulic link (1) for applying a pressure medium to a clutch or brake, having a master cylinder (2) assigned to the clutch or brake pedal and a slave cylinder (3) that applies pressure to the clutch or brake, which are connected with each other via a pressure line, a valve unit (4) situated in the hydraulic link (1) comprising a throttling valve with integrated check valve (11) which throttles the pressure medium at least when engaging, and the check valve (11) lets the pressure medium pass unimpeded when the clutch or brake pedal is operated, an axially movable piston (10b) is guided in the valve unit, an orifice (20) of this valve unit (4) is monitored by a check valve (11), and a bore (15) is executed as the constriction for the engaging process of the cutch, **characterized in that** the piston (10b) has on its end a tappet (10b¹) which is axially movable in the throttle bore (15) as far as a cap (13) that acts as a throttle valve, and the throttle bore (15) has an enlargement in the form of a recess (15a) with an axial dimension of (x) in at least one place on its circumference.

2. Hydraulic link according to Claim 1, **characterized in that** a sleeve for receiving the throttle bore (15) and a bore (16) for receiving a check valve (11) are formed in an opening (14) of the housing (10a).

3. Hydraulic link according to Claim 1, **characterized in that** the bore (15) is provided with a plurality of recesses (15a) situated on its circumference, with any cross-sectional shape desired.

4. Hydraulic link according to Claim 1, **characterized in that** the recess (15a) is in the form of an undercut around the bore (15).

5. Hydraulic link according to Claim 1, **characterized in that** the cap (13) has a centered through bore and a number of recesses distributed around its circumference.

6. Hydraulic link according to Claims 1 and 5, **characterized in that** the recess (15a) corresponds to a part of the diameter of the interior bore of the cap (13).

7. Hydraulic link according to Claims 1, 5 and 6, **characterized in that** the cap (13) is fixed radially and axially in a pressure port (3a) radially around its outside circumference.

8. Hydraulic link according to Claim 1, **characterized in that** the length of the tappet (10b¹) is matched to the length of the throttle bore (15).

9. Hydraulic link according to Claim 1, **characterized in that** the tappet (10b¹) is of bulbous design at its end area, and the outside diameter of this end area corresponds to the diameter of the throttle bore (15).

10. Hydraulic link according to Claim 1, **characterized in that** the stepped circumferential surface of the housing (10a) has a bore (20) in the area of the check valve (11) that is closable by the valve body of the check valve (11), depending on the direction.

## Revendications

1. Tronçon de circuit hydraulique (1) pour l'actionnement d'un embrayage ou d'un frein, composé d'un moyen de pression, d'un maître-cylindre (2) associé à la pédale d'embrayage ou de frein et d'un cylindre récepteur (3) actionnant l'embrayage ou le frein, reliés l'un à l'autre par l'intermédiaire d'une conduite forcée, d'un dispositif de vanne (4) disposé dans le tronçon de circuit hydraulique (1) et composé d'un étranglement avec clapet anti-retour (11) intégré qui étrangle le moyen de pression au moins lors du débrayage, le clapet anti-retour (11) laissant passer le moyen de pression lors de l'actionnement de la pédale d'embrayage ou de frein, un piston (10b) pouvant être déplacé en direction axiale étant introduit dans le dispositif de vanne (4), un orifice (20) ménagé dans ce dispositif de vanne (4) étant contrôlé par un clapet anti-retour (11) et un taraudage (15) étant exécuté en tant que point d'étranglement pour le processus d'engrènement de l'embrayage, **caractérisé en ce que** le piston (10b) présente en son extrémité un poussoir (10b¹) qui peut être déplacé en direction axiale dans le taraudage d'étranglement (15) jusqu'à une calotte (13) faisant office d'étranglement et **en ce que** le taraudage d'étranglement (15) présente au moins en un endroit de sa circonférence un élargissement en forme d'encoche (15a) évasée en direction axiale (x).

2. Tronçon de circuit hydraulique selon la revendication 1, **caractérisé en ce que**, dans un orifice (14) ménagé dans le boîtier (10a), une gaine est formée, destinée à accueillir le taraudage d'étranglement (15), et un taraudage (16) est formé, destiné à accueillir un clapet anti-retour (11).

3. Tronçon de circuit hydraulique selon la revendication 1, **caractérisé en ce que** le taraudage (15) est pourvu de plusieurs encoches (15a) de coupe quelconque, disposées sur sa circonférence.

4. Tronçon de circuit hydraulique selon la revendication 1, **caractérisé en ce que** l'encoche (15a) est ménagée en contre-dépouille autour du taraudage (15).

5. Tronçon de circuit hydraulique selon la revendication 1, **caractérisé en ce que** la calotte (13) présente un trou traversant central et, sur son bord extérieur, plusieurs encoches réparties sur sa circonférence.

6. Tronçon de circuit hydraulique selon les revendications 1 et 5, **caractérisé en ce que** l'encoche (15a) correspond à une portion du diamètre du taraudage interne de la calotte (13).

7. Tronçon de circuit hydraulique selon les revendications 1, 5 et 6, **caractérisé en ce que** la calotte (13) est fixée en directions radiale et axiale, dans un raccord de refoulement (3a), par son bord extérieur.

8. Tronçon de circuit hydraulique selon la revendication 1, **caractérisé en ce que** la longueur du poussoir (10b¹) est adaptée à la longueur du taraudage d'étranglement (15).

9. Tronçon de circuit hydraulique selon la revendication 1, **caractérisé en ce que** le poussoir (10b¹) présente un renflement en son extrémité et **en ce que** le diamètre de cette extrémité correspond au diamètre du taraudage d'étranglement (15).

10. Tronçon de circuit hydraulique selon la revendication 1, **caractérisé en ce que** la surface de revêtement du boîtier (10a) présente, dans la zone du clapet anti-retour (11), un taraudage (20) qui peut être fermé par le corps de vanne du clapet anti-retour (11) en fonction de la direction de déplacement.
